# EUROPÄISCHE PATENTANMELDUNG

(11) **EP 1 647 454 A1**
(43) Veröffentlichungstag der Anmeldung: **19.04.2006**
(21) Anmeldenummer: 04104988.3
(22) Anmeldetag: 12.10.2004
(51) Int. Cl.: B60R 21/04

(54) **Verkleidungs- oder Auskleidematte**

(71) Anmelder: Ford Global Technologies, LLC, A subsidary of Ford Motor Company, Dearborn, MI 48126 (US)
(72) Erfinder: Varcus, Johannes, 45549, Sprockhövel (DE); Spürck, Torsten, 51467, Bergisch Gladbach (DE)
(74) Vertreter: Dörfler, Thomas

(57) **Zusammenfassung**

Die Erfindung betrifft eine Verkleidungs- oder Auskleidungsmatte (1) mit energieabsorbierenden und schalldämmenden Eigenschaften für den Innenraum von Fahrzeugen, bestehend aus einem schalldämmenden Element (2) und einer energieabsorbierenden Struktur (3), wobei das schalldämmende Element (2) Ausnehmungen (21) aufweist, in welche die energieabsorbierende Struktur (3) einbringbar ist, wobei die energieabsorbierende Struktur (3) aus einer Grundplatte (31) mit daran angeordneten in die Ausnehmungen (21) weisenden Zapfen (33) besteht.

Dadurch ist es möglich, die Verkleidungs- oder Auskleidungsmatte aus zwei Teilstücken getrennt und unabhängig voneinander herzustellen, wobei die beiden Teilstücke bei der Montage in einfacher Weise z. B. durch Zusammenstecken miteinander verbunden werden.

## Beschreibung

Die Erfindung betrifft eine Verkleidungs- oder Auskleidungsmatte mit energieabsorbierenden und schalldämmenden Eigenschaften für den Innenraum von Fahrzeugen, bestehend aus einem schalldämmenden Element und einer energieabsorbierenden Struktur, und ein Herstellverfahren für eine solche Matte.

Eine derartige Matte mit mechanisch dämpfenden und schalldämmenden Eigenschaften wird bereits in der EP 0 744 281 vorgeschlagen. Die darin beschriebene Fahrgastzellenauskleidung zeichnet sich dadurch aus, daß sie aus einer Wand besteht, auf deren Oberseite ein starres zellen- bzw. wabenförmiges Material mit einer Vielzahl nebeneinander liegender Elemente angeordnet ist, das energieabsorbierend wirkt und bei dem die Höhlräume der Zellen bzw. Waben teilweise oder ganz mit einem offenporigen Schaumstoff gefüllt werden, wobei die Schaumstoffschicht die Ränder des zellenförmigen Materials überragt. Die schalldämmende Schaumstoffschicht ist auf der Seite der Auskleidung vorgesehen, die auf dem Fahrzeugblech befestigt werden soll, wobei so verhindert wird, daß die wabenförmigen Elemente mit ihren Rändern in Kontakt mit dem Blech kommen. Die wabenförmigen Elemente sind dabei so ausgeführt, daß sie unter Stoßeinwirkung zerstört werden und so die Energie durch Deformation absorbieren.

In der EP 0 832 374 ist eine weitere energieabsorbierende Struktur beschrieben, die durch Reihen von hohlen, konischen Erhebungen gebildet wird, die sich auf einer Basisfläche erheben. Die Zwischenräume sind mit Schaum gefüllt und die vorgeschlagenen Erhebungen sind zweistufig ausgebildet. Die Stufen weisen zueinander Sollbruchstellen auf, die unter Krafteinwirkung brechen und zu einem teleskopischen Einfalten führen. Die Struktur dient sowohl als energieabsorbierendes Element als auch zur akustischen Dämmung.

Beide genannten Schriften zeigen eine als formschlüssiger Verbund hergestellte Verkleidungs- oder Auskleidungsmatten mit mechanisch dämpfenden und schalldämmenden Eigenschaften, die aus einer der akustischen Dämmung dienenden Schaumstruktur mit darin eingebetteten energieabsorbierenden Elementen bestehen, wobei die zur akustischen Dämmung dienende Struktur jeweils auf die energieabsorbierenden Elemente abgestimmt werden muss.

Vor diesem Hintergrund stellt die vorliegende Erfindung sich die Aufgabe, eine einfacher herstellbare Verkleidungs- oder Auskleidungsmatte für Fahrzeuge mit mechanisch dämpfenden und schalldämmenden Eigenschaften vorzustellen.

Erfindungsgemäß wird diese Aufgabe durch die Merkmale der Ansprüche 1 bzw. 12 gelöst. Vorteilhafte Weiterbildungen der Erfindung sind in den abhängigen Ansprüchen enthalten.

Demnach betrifft die Erfindung eine Verkleidungs- oder Auskleidungsmatte, bestehend aus einem schalldämmenden Element und einer energieabsorbierenden Struktur, wobei das schalldämmende Element Ausnehmung ausweist, in welche die energieabsorbierende Struktur einbringbar ist, und wobei die energieabsorbierende Struktur aus einer Grundplatte mit daran angeordneten in die Ausnehmung weisenden Zapfen besteht. Das schalldämmende Element integriert dabei vollständig die energieabsorbierende Struktur, ohne daß diese mechanisch unlösbar verbunden sein müssen. Insbesondere erlaubt dies eine freie Materialwahl für beide, die energieabsorbierende Struktur und das schalldämmende Element.

Weiterhin ist es besonders vorteilhaft möglich, die Verkleidungs- oder Auskleidungsmatte aus zwei Teilstücken getrennt und unabhängig voneinander herzustellen, nämlich einerseits das schalldämmende Element und andererseits die energieabsorbierende Struktur, wobei die beiden Teilstücke beim Fahrzeughersteller bei der Montage in einfacher Weise z. B. durch Zusammenstecken miteinander verbunden werden. Während das schalldämmende Element beispielsweise bei der Montage im Boden des Fahrzeuges bei jedem Fahrzeugtyp in gleicher Weise und Form eingearbeitet werden kann, ist die energieabsorbierende Struktur je nach Erfordernis bzw. in Abhängigkeit vom Fahrzeugtyp ausführbar.

Vorteilhaft sind zwischen den Zapfen Öffnungen in der Grundplatte vorgesehen. Damit wird eine verbesserte Schallisolierung erreicht, da der Schall vom hinter den Öffnungen liegenden schalldämmenden Element getilgt wird.

Vorteilhaft ist das schalldämmende Element aus einem Fasermaterial für Akustikanwendungen gebildet. Dies können z. B. gepreßte Fliesmatten sein. Derartige Materialien sind von den Materialkosten her sehr günstig und lassen sich einfach und kostengünstig verarbeiten.

Nach einem weiteren Merkmal besteht die energieabsorbierende Struktur bevorzugt aus einem formbaren Material, wie Kunststoff oder Metall, das bei Stoß plastisch deformierbar ist. Abhängig vom plastischen Materialverhalten läßt sich damit die Energieaufahme der energieabsorbierende Struktur an die erforderlichen Gegebenheiten anpassen.

Die gemäß der Erfindung vorgesehenen Zapfen sind entsprechend den Erfordernissen der Last- bzw. Energieaufnahme unterschiedlich ausgeführt und bestehen entweder aus Vollmaterial und sind spitz und stiftartig oder stumpfkegelig ausgebildet, sie können aber auch hohl ausgeführt sein. Nach einem weiteren Merkmal sind die Zapfen hohl ausgebildet und weisen an ihren spitz zulaufenden Enden Öffnungen auf. Die Zapfen sind nach einem anderen Merkmal hohl ausgebildet und weisen Sollbruchstellen auf, die unter Krafteinwirkung brechen und zu einem teleskopischen Einfalten führen.

Besonders vorteilhaft sind die Öffnungen nach einem weiteren Merkmal siebartig über die Grundplatte verteilt, wobei die Öffnungen in allen technisch machbaren und sinnvollen geometrischen Formen ausführbar sind.

Nach einem bevorzugten Merkmal der Erfindung sind die Zapfen vertikal und/oder horizontal und/oder diagonal mindestens durch die genannten Öffnungen voneinander beabstandet. Vorteilhaft verringern die vorgesehenen Öffnungen das Gewicht und den Materialverbrauch.

Schließlich ist nach einem weiteren Merkmal vorgesehen, daß die Grundplatte mit den zwischen den Zapfen liegenden Öffnungen auf der den Zapfen abgewandten Seite mit einer starren Platte abgedeckt ist.

Weiterhin wird die erfinderische Aufgabe gelöst durch ein Verfahren zur Herstellung der Verkleidungs- bzw. Auskleidungsmatte. Das Verfahren weist folgende Schritte auf:
- Lochen der Ausnehmungen in der energieabsorbierende Struktur mittels Lochhülsen von der Unterseite der energieabsorbierenden Struktur aus,
- Einführen der Zapfen in die Lochhülsen auf der Oberseite der energieabsorbierenden Struktur, wobei die Lochhülsen in den Ausnehmungen stecken,
- Positionieren des schalldämmenden Elements auf der energieabsorbierenden Struktur, wobei die sich in den Lochhülsen befindlichen Zapfen in den Ausnehmungen verbracht werden,
- Herausziehen der Lochhülsen aus den Aufnahmen, so daß die Zapfen unmittelbar in den Ausnehmungen positioniert sind.

Ein solches Verfahren ermöglicht es, insbesondere bei faseriger Beschaffenheit des schalldämmenden Elementes, in einem Arbeitsgang die Ausnehmungen im Element zu erzeugen und die energieabsorbierende Struktur relativ zum schalldämmenden Element zu positionieren, hier insbesondere die Zapfen in den Aufnahmen. Die Ausnehmung kann dabei z. B durch Lochen, Stanzen oder Verdrängen des Materials mittels der Lochhülse entstehen. Die Ausnehmung kann bei diesem Verfahren jedoch auch bereits vorher im schalldämmenden Element erzeugt worden sein.

Vorteilhaft ist in der Lochhülse eine Lochspitze verschiebbar angeordnet ist, wobei die Lochspitze nach der ersten Lochoperation in die Lochhülse zurückgezogen wird. Hier dient die Lochspitze dazu, die Ausnehmung im schalldämmenden Element zu erzeugen. Die Lochspitze wird danach, damit die Zapfen in die Lochhülsen eingeführt werden können, in die Lochhülse zurückgezogen. Vorteilhaft kann damit das schalldämmende Element durchdrungen und die Ausnehmung hergestellt werden, ohne daß ein Verschnittabfall entsteht. Solcher Abfall kann, insbesondere bei hohen Stückzahlen, rasch zu einer Verschmutzung des Arbeitsbereiches führen und damit die Werkzeuge unbenutzbar machen.

Im folgenden wird die Erfindung beispielhaft und nicht hierauf begrenzt anhand von Zeichnungen näher erläutert. Dabei zeigen:
- Figur 1:: eine schematische perspektivische Explosionsdarstellung der erfindungsgemäßen Auskleidungsmatte;
- Figur 2:: eine schematische Ansicht eines Schnitts durch einen Teil der Matte aus Fig. 1;
- Figur 3:: die perspektivische Ansicht einer energieabsorbierenden Struktur;
- Figuren 4 bis 7:: Schnitte durch weitere Auskleidungsmatten; und
- Figuren 8a ― 8f:: ein Fertigungsverfahren für die erfinderische Matte.

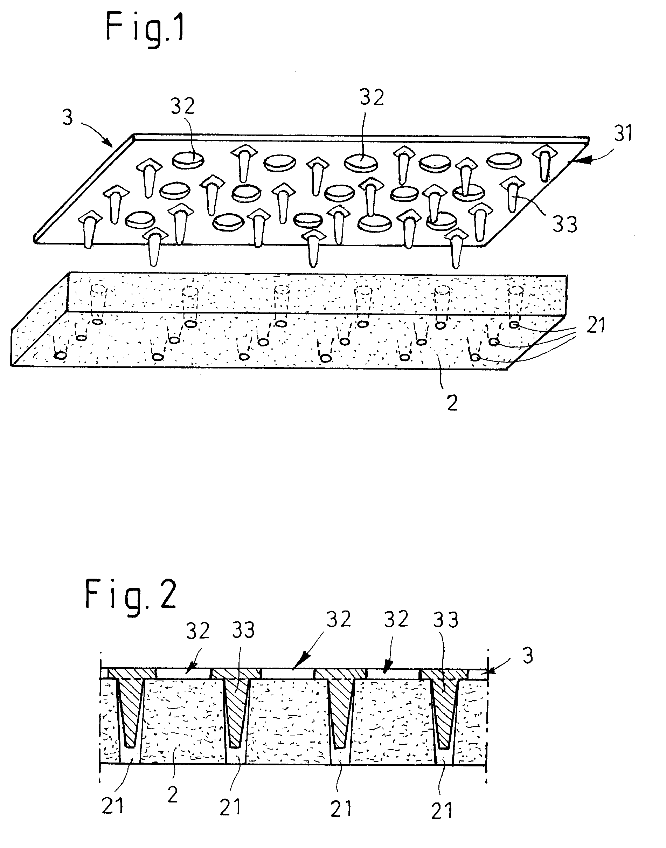

In der Figur 1 ist eine schematische perspektivische Explosionsdarstellung der Auskleidungsmatte bestehend aus einem schalldämmenden Element 2 und einer energieabsorbierenden Struktur 3 gezeigt. Das schalldämmende Element 2 weist Ausnehmung 21 auf, in welche die energieabsorbierende Struktur 3 einsteckbar ist. Die energieabsorbierende Struktur 3 besteht aus einer Grundplatte 31 mit daran angeordneten in die Ausnehmung 21 weisenden Zapfen 33, wobei zwischen den Zapfen 33 Öffnungen 32 vorgesehen sind.

In der Figur 2 ist eine Teilansicht der zusammengesteckten Matte in Schnittdarstellung gezeigt. Das schalldämmende Element 2 integriert dabei vollständig die energieabsorbierende Struktur 3, wobei durch die vorgesehenen Öffnungen 32 eine verbesserte Schallisolierung erreicht wird. Das schalldämmende Element 2 besteht hier aus einem thermoplastischen Kunststoff hoher Dichte mit schalldämmenden Eigenschaften. Die Ausnehmungen 21 sind als runde Löcher ins schalldämmende Element 2 eingebracht. Sie weisen einen größeren Durchmesser als die Zapfen 33 auf, so daß die energieabsorbierende Struktur 3 auf jeden Fall einfach in das schalldämmende Element 2 gesteckt werden kann. Selbstverständlich sind auch andere Formen der Ausnehmungen und damit der erfindungsgemäßen Matte möglich. Die energieabsorbierende Struktur 3 besteht bevorzugt aus einem formbaren Material wie Kunststoff oder Metall, das bei Stoß deformierbar ist.

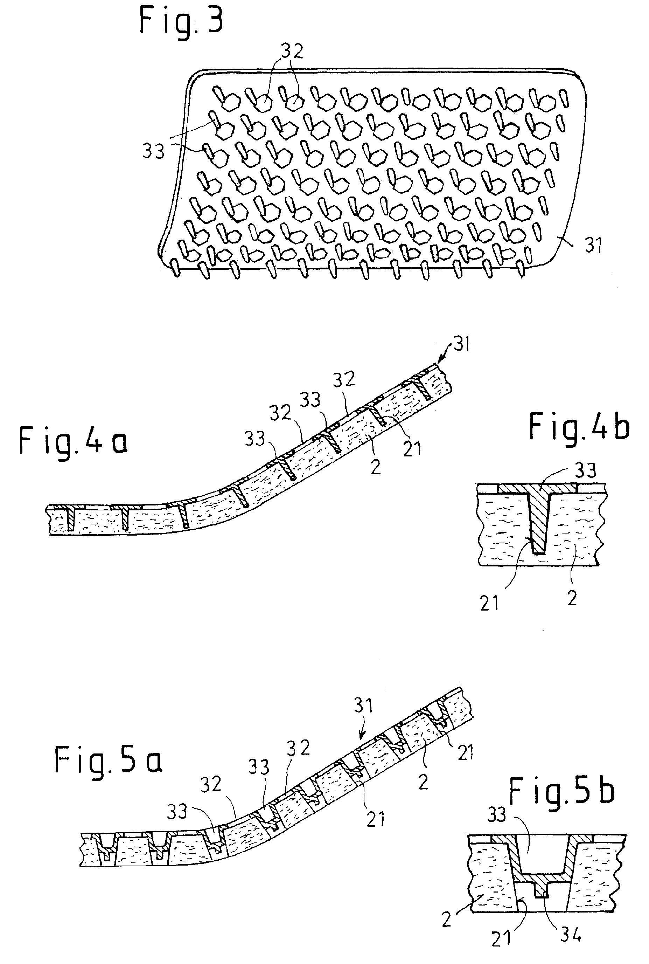

In Figur 3 ist eine Ausführungsform der energieabsorbierenden Struktur 3 in perspektivischer Ansicht gezeigt. Daraus ist zu erkennen, daß die Öffnungen 32 siebartig über die Grundplatte 31 verteilt sind und die verschiedensten geometrischen Formen aufweisen können. Aus den Darstellungen ist auch ersichtlich, daß die Öffnungen 32 die Zapfen 33 vertikal, horizontal und diagonal voneinander beabstanden.

Die verschiedenen Ausführungen der Matte sind in den Figuren 4 bis 7 dargestellt, wobei a jeweils den Gesamtschnitt und b jeweils ein vergrößerten Ausschnitt aus a darstellt.

Figur 4a und 4b zeigen eine energieabsorbierende Struktur 3 mit spitzen, massiven Zapfen 33 ähnlich wie in Figur 1 und 2. Im Unterschied dazu besteht das schalldämmende Element 2 aus einer faserigen Matte. Die Ausnehmungen 21 entstehen dann dadurch, daß die Zapfen direkt in das faserige Material des schalldämmenden Elementes 2 gesteckt sind.

In Figur 5a und 5b sind die Zapfen 33 hohl ausgebildet, mit einer massiven Spitze 34. Die Spitze 24 erlaubt die einfachere Zentrierung der Zapfen 33 in den Ausnehmungen 21.

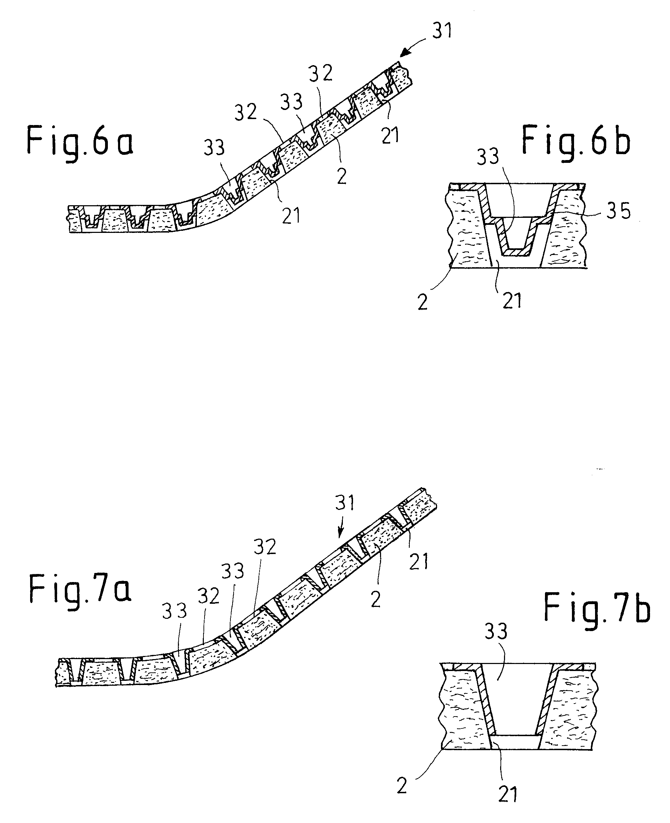

Figur 6a und 6b zeigen ein Matte, bei der die hohlen Zapfen 33 einen Absatz 35 als Sollbruchstelle aufweisen. Dies erlaubt ein kontrolliertes, teleskopartiges Zusammenfalten der Zapfen 33 bei hoher Belastung.

Figur 7a und 7b zeigen eine Matte mit Zapfen 33, die am Ende offen sind. Damit lassen sich sehr leichte, jedoch äußerst tragfähige Zapfen 33 herstellen.

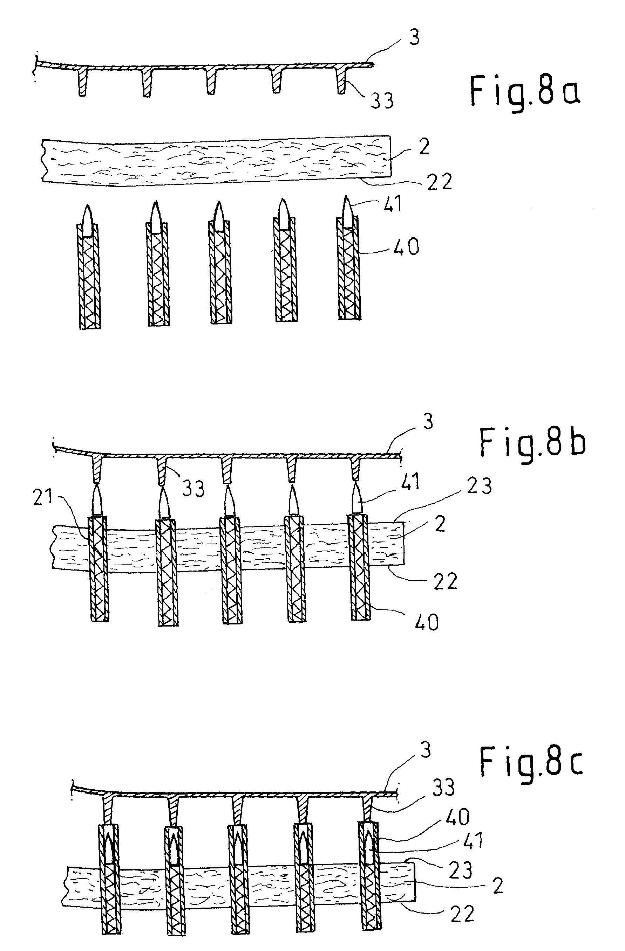

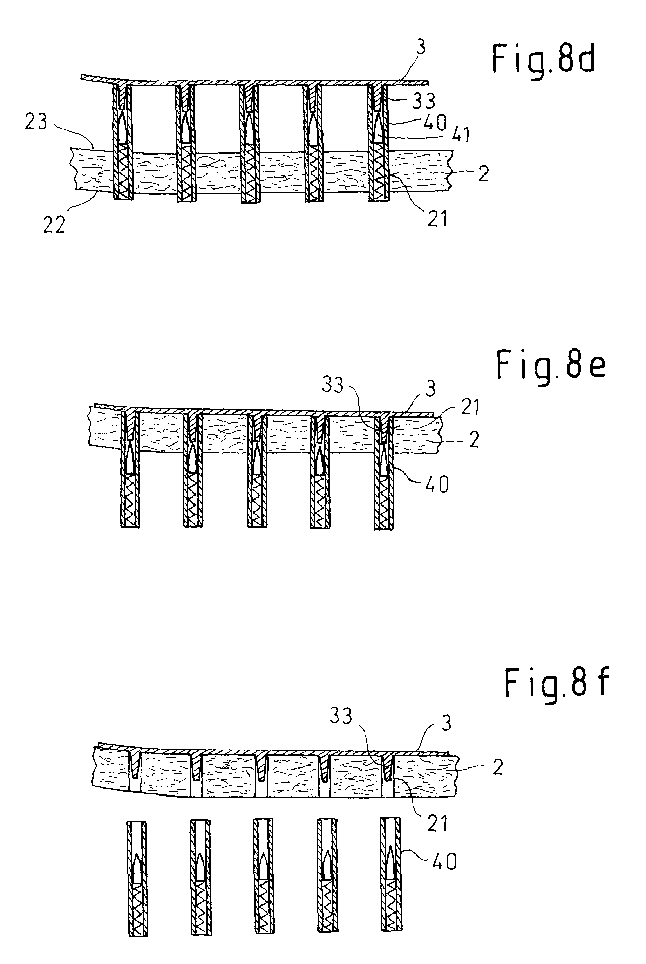

In den Figuren 8a bis 8f ist ein möglicher Fertigungsablauf für eine erfindungsgemäße Verkleidungsmatte gezeigt. Figur 8a zeigt die Ausgangslage mit dem schalldämmenden Element 2, der energieabsorbierenden Struktur 3 und mit Lochhülsen 40, die auf der Rückseite 22 des schalldämmenden Elements 2 angreifen. In den Lochhülsen 40 sind verschiebbare Lochspitzen 41 untergebracht.

Figur 5b zeigt den ersten Arbeitsschritt, die Lochoperation, in dem die Lochspitzen 41 und die Lochhülsen 40 das schalldämmende Element 2 von der Rückseite 22 her durchstoßen und dadurch die Ausnehmungen 21 gebildet werden.

Im nächsten Arbeitsschritt werden die Zapfen 33 in die Lochhülsen 40 auf der Oberseite 23 des schalldämmenden Elements 2 eingeführt, wobei Figur 8c den Zustand vorher und Figur 8d den Zustand nachher zeigt. Dazu werden die Lochspitzen 41 nach innen in die Lochhülsen 40 verschoben. Die Lochhülsen 41 selbst werden relativ zu den Ausnehmungen 21 nicht verschoben und bleiben dadurch in diesen stecken.

Figur 8e zeigt das Positionieren des schalldämmenden Elements 2 auf der energieabsorbierenden Struktur 3, wobei die sich in den Lochhülsen 40 befindlichen Zapfen 33 in die Ausnehmungen 21 verbracht werden. Dabei werden auch die Lochhülsen 40 etwas in den Ausnehmungen 21 verschoben, bleiben aber noch in den Ausnehmungen 21 zwischen den Zapfen 33 und den Ausnehmungen 21 selbst.

In Figur 8f ist als letzte Operation das Herausziehen der Lochhülsen 40 aus den Ausnehmungen 21 gezeigt. Jetzt sind die Zapfen 33 unmittelbar in den Ausnehmungen positioniert.

## Patentansprüche

1. Verkleidungs- oder Auskleidungsmatte (1) mit energieabsorbierenden und schalldämmenden Eigenschaften für den Innenraum von Fahrzeugen, bestehend aus einem schalldämmenden Element (2) und einer energieabsorbierenden Struktur (3), **dadurch gekennzeichnet, daß** das schalldämmende Element (2) Ausnehmungen (21) aufweist, in welche die energieabsorbierende Struktur (3) einbringbar ist, wobei die energieabsorbierende Struktur (3) aus einer Grundplatte (31) mit daran angeordneten, in die Ausnehmungen (21) weisenden Zapfen (33) besteht.

2. Verkleidungs- oder Auskleidungsmatte nach Anspruch 1, **dadurch gekennzeichnet, daß** zwischen den Zapfen (33) Öffnungen (32) in der Grundplatte (31) vorgesehen sind.

3. Verkleidungs- oder Auskleidungsmatte nach den Ansprüchen 1 oder 2, **dadurch gekennzeichnet, daß** das schalldämmende Element (2) aus einem Fasermaterial für Akustikanwendungen gebildet wird.

4. Verkleidungs- oder Auskleidungsmatte nach einem der vorherigen Ansprüche, **dadurch gekennzeichnet, daß** die energieabsorbierende Struktur (3) aus einem formbaren Material wie Kunststoff oder Metall besteht, das bei Stoß plastisch deformierbar ist.

5. Verkleidungs- oder Auskleidungsmatte nach einem der vorherigen Ansprüche, **dadurch gekennzeichnet, daß** die Zapfen (33) aus Vollmaterial bestehen und spitz und stiftartig, oder stumpfkegelig ausgebildet sind.

6. Verkleidungs- oder Auskleidungsmatte nach einem der Ansprüche 1 bis 4, **dadurch gekennzeichnet, daß** die Zapfen (33) hohl ausgebildet sind.

7. Verkleidungs- oder Auskleidungsmatte nach Anspruch 6, **dadurch gekennzeichnet, daß** die Zapfen (33) an ihren spitz zulaufenden Enden Öffnungen aufweisen.

8. Verkleidungs- oder Auskleidungsmatte nach einem der Ansprüche 6 oder 7, **dadurch gekennzeichnet, daß** die Zapfen (33) hohl ausgebildet sind und Sollbruchstellen (35) aufweisen, die unter Krafteinwirkung brechen und zu einem teleskopischen Einfalten führen.

9. Verkleidungs- oder Auskleidungsmatte nach einem der vorherigen Ansprüche, **dadurch gekennzeichnet, daß** Öffnungen (32) siebartig über die Grundplatte (31) verteilt sind, wobei die Öffnungen (32) beliebige geometrische Formen aufweisen können.

10. Verkleidungs- oder Auskleidungsmatte nach einem der vorherigen Ansprüche, **dadurch gekennzeichnet, daß** mindestens die Öffnungen (32) die Zapfen (33) vertikal und/oder horizontal und/oder diagonal voneinander beabstanden.

11. Verkleidungs- oder Auskleidungsmatte nach einem der o.a. Ansprüche, **dadurch gekennzeichnet, daß** die Grundplatte (31) mit den zwischen den Zapfen (33) liegenden Öffnungen (32) auf der den Zapfen (33) abgewandten Seite mit einer starren Platte abgedeckt ist.

12. Verfahren zur Herstellung einer Verkleidungs- oder Auskleidungsmatte (1) mit energieabsorbierenden und schalldämmenden Eigenschaften für den Innenraum von Fahrzeugen, bestehend aus einem schalldämmenden Element (2) und einer energieabsorbierenden Struktur (3), wobei das schalldämmende Element (2) Ausnehmungen (21) aufweist, in welche die energieabsorbierende Struktur (3) einbringbar ist, und wobei die energieabsorbierende Struktur (3) aus einer Grundplatte (31) mit daran angeordneten, in die Ausnehmungen (21) weisenden Zapfen (33) besteht, **gekennzeichnet durch** die Verfahrensschritte
- Herstellen der Ausnehmungen (21) im schalldämmende Element (2) mittels Lochhülsen (40) von der Unterseite (22) des schalldämmenden Elements (2) aus,
- Einführen der Zapfen (33) in die Lochhülsen (40) von der Oberseite (23) des schalldämmenden Elements (2), wobei die Lochhülsen (40) in den Ausnehmungen (21) stecken,
- Positionieren der energieabsorbierenden Struktur (3) auf dem schalldämmenden Element (2), wobei die sich in den Lochhülsen befindlichen Zapfen (33) in die Ausnehmungen (21) verbracht werden,
- Herausziehen der Lochhülsen (40) aus den Ausnehmungen (21), so daß die Zapfen (33) unmittelbar in den Ausnehmungen (21) positioniert sind.

13. Verfahren nach Anspruch 12, **dadurch gekennzeichnet, daß** in einer Lochhülse (40) eine Lochspitze (41) verschiebbar angeordnet ist, wobei die Lochspitze (41) nach der ersten Lochoperation in die Lochhülse (40) zurückgezogen wird.
